# FASCICULE DE BREVET EUROPEEN

(11) **EP 0 585 166 B1**
(45) Date de publication et mention de la délivrance du brevet: **26.03.1997**
(21) Numéro de dépôt: 93402066.0
(22) Date de dépôt: 18.08.1993
(51) Int. Cl.: C03C 17/23, C03C 23/00

(54) **Procédé de traitement de couches minces à propriétés de conduction électrique et/ou de réflexion dans l'infra-rouge**
Verfahren zur Behandlung von Dünnfilme mit elektrisch leitenden und/oder infra-rot reflektierenden Eigenschaften
Process for the treatment of thin films having electric conduction and/or infra-red reflecting properties

(30) Priorité: 28.08.1992 FR 9210388
(43) Date de publication de la demande: 02.03.1994
(73) Titulaire: SAINT-GOBAIN VITRAGE, 92400 Courbevoie (FR)
(72) Inventeur: Buffat, Bernard, F-75010 Paris (FR); Lerbet, François M., F-75010 Paris (FR); Pillias, Danièle, F-93600 Aulnay Sous Bois (FR)
(74) Mandataire: Muller, René

(56) Documents cités:
- EP-A- 0 350 362
- DE-A- 1 909 869
- GB-A- 1 446 849
- MATERIALS RESEARCH SOCIETY SYMPOSIUM PROCEEDINGS VOL.27(1984) PAGE 765-770 "RECOIL IMPLANTATION OF ITO THIN FILMS ON GLASS SUBSTRATES" B.H.RABIN ET AL
- THIN SOLID FILMS vol. 11 , 1972 , LAUSANNE CH pages 1 - 21 P.T.STROUD 'ION BOMBARDMENT AND IMPLANTATION AND THEIR APPLICATION TO THIN FILMS'

## Description

L'invention a trait à un procédé de traitement de couches minces présentant des propriétés de conduction électrique et/ou des propriétés de réflexion dans l'infra-rouge, notamment de basse émissivité, en vue de modifier localement lesdites propriétés de manière sélective.

Le procédé de traitement concerne plus particulièrement les couches minces semi-conductrices à base d'oxyde(s) métallique(s) sous-stoechiométrique(s) disposées sur des substrats transparents, notamment en verre, soit directement, soit par l'intermédiaire d'autres couches minces.

L'invention concerne également l'application de ce procédé à la fabrication de vitrages, notamment de vitrages chauffants pour véhicules tels que les avions.

Le principe bien connu d'un vitrage chauffant, permettant le dégivrage ou le désembuage, réside dans l'échauffement contrôlé par effet Joule d'une couche mince conductrice déposée sur un substrat du vitrage, et ceci lorsqu'elle est mise sous tension à l'aide d'amenées de courant généralement connectées à la couche sur deux de ses côtés opposés.

Le problème constant de ce type de vitrage est que dès que le vitrage adopte une géométrie relativement complexe, par exemple lorsqu'il présente un contour non rectangulaire et/ou un bombage plus ou moins prononcé, il n'est plus possible d'obtenir un chauffage uniforme de toute la surface du vitrage quand la couche conductrice présente en tout point des caractéristiques électriques sensiblement constantes. Or cette géométrie se retrouve dans la plupart des vitrages équipant voitures ou avions, comme dans les pare-brise par exemple, alors même qu'il est très important de garantir un champ de vision maximal à travers les vitrages pour des raisons évidentes de sécurité, quelles que soient les conditions climatiques.

Il est alors nécessaire, pour obtenir ce chauffage uniforme, de prévoir les zones dans la couche qui devront présenter une conductivité électrique modifiée ou, ce qui est équivalent et très usuellement utilisé dans le domaine des vitrages chauffants, une résistance carrée modifiée.

Les solutions techniques apportées à ce jour pour fabriquer une couche conductrice à zones différenciées de conductivité ou de résistance carrée n'apportent pas entièrement satisfaction.

Ainsi, il est connu de la demande de brevet FR-A-2 208 005 un procédé de traitement d'une couche conductrice déposée par pulvérisation cathodique qui permet de modifier localement l'épaisseur de la couche et ceci pendant l'opération de pulvérisation même, notamment à l'aide d'un certain nombre de masques. La diminution locale de l'épaisseur dans les zones où sont utilisés les masques induit une augmentation contrôlée de la résistance carrée. (On rappelle en effet que la résistance carrée R_{□} est égale au quotient de la résistivité ρ par l'épaisseur e : R_{□} = ρ/e). Cependant, l'inconvénient majeur de cette technique est qu'il peut s'avérer nécessaire de créer des zones présentant des résistances carrées très supérieures à la résistance initiale de la couche. Cela impose alors des variations considérables d'épaisseur dans la couche, variations induisant un aspect optique global du vitrage, notamment en réflexion, particulièrement inhomogène et gênant.

Il est par ailleurs connu du brevet FR-2 584 392 un traitement consistant à soumettre la couche d'oxyde conductrice, une fois déposée, à un chauffage très intense et rapide, en atmosphère oxydante ou réductrice. Ceci a pour conséquence de respectivement diminuer ou augmenter cette fois la résistivité de la couche, a priori sans en modifier l'épaisseur. Cette technique, qui utilise notamment des brûleurs, peut être un chauffage différencié d'une zone à l'autre de la couche afin d'obtenir des conductivités différentes. Cependant, elle semble plus adaptée en tant que post-traitement à la suite d'un dépôt par pyrolyse sur un ruban de verre continu qu'à la suite d'un dépôt par un procédé utilisant le vide, type pulvérisation cathodique.

L'invention a alors pour but un procédé de traitement qui permette de créer dans une couche mince conductrice à base d'oxyde(s) métallique(s) des zones différenciées de conductivité électrique, et ceci en palliant aux inconvénients précités, c'est-à-dire en étant fiable et précis, applicable quel que soit le mode d'obtention de la couche et préservant l'homogénéité de l'aspect optique d'un vitrage comportant une telle couche.

L'invention a pour objet un procédé de traitement en vue de modifier localement les propriétés de conductivité électrique et/ou de réflexion dans l'infra-rouge type basse émissivité d'une couche mince à base d'oxyde(s) métallique(s) notamment sous-stoechiométrique(s) et disposée sur un substrat transparent, notamment en verre, directement ou par l'intermédiaire d'autres couches minces. Ledit procédé consiste à soumettre de manière sélective la couche conductrice, que l'on a portée à haute température c'est-à-dire à au moins 150°C, à un faisceau d'ions à « faible énergie», c'est-à-dire un faisceau d'ions dont les paramètres sont choisis de manière à éviter la pulvérisation de la couche.

On comprend dans le cadre de l'invention l'expression "faisceau d'ions à faible énergie" comme un faisceau d'ions dont les paramètres sont choisis de manière à éviter la pulvérisation de la couche dans les zones soumises audit faisceau sous l'impact des ions.

Deux variantes sont alors envisageables. Au moins une partie des ions du faisceau peuvent tout d'abord être de nature oxydante, comme des ions à base d'oxygène ionisé, ce qui a comme conséquence de diminuer localement la conductivité électrique de la couche dans les zones soumises au faisceau.

Au moins une partie des ions du faisceau peuvent être au contraire de nature réductrice, comme des ions à base d'hydrogène ionisé, ce qui a comme conséquence d'augmenter localement la conductivité électrique des zones soumises au faisceau.

Les avantages de cette technique de traitement sont nombreux. Tout d'abord on découple totalement l'opération de traitement de celle du dépôt, ce qui permet d'envisager toutes les techniques usuelles de dépôt de couche telles que les technique utilisant le vide ou les techniques dites de pyrolyse. Par ailleurs, on peut parfaitement contrôler la localisation des zones à traiter, de par une focalisation du faisceau de direction modulable et maîtrisable. Cette technique ne modifie en outre pas l'épaisseur des zones de la couche qui sont soumises au faisceau. On garantit ainsi au vitrage incorporant la couche traitée une même homogénéité d'aspect optique que celle du vitrage qui présenterait une couche non traitée, quelle que soit l'importance du traitement.

Cette technique peut en outre s'adapter aisément à tout type de couche d'oxyde métallique semi-conductrice, quelle que soit sa conductivité électrique après dépôt, puisqu'elle donne le choix d'augmenter ou au contraire de diminuer localement cette conductivité. (On rappelle que la conductivité est l'inverse de la résistivité).

Les auteurs ont ainsi découvert l'effet sur la résistivité, particulièrement surprenant, de la conjugaison entre un faisceau d'ions et un chauffage, bien que jusque-là les faisceaux d'ions aient été utilisés pour des objectifs très différents.

On connaît en effet l'utilisation des faisceaux d'ions dans les techniques dites "de dépôt assisté par des ions", ou "Ion-Assisted Deposition IAD" en anglais, où le faisceau notamment d'ions oxygène visant la couche au cours de son dépôt par évaporation ou pulvérisation ionique engendre une densification de la couche d'oxyde métallique ainsi formée. Cette densification, mesurable en général par une augmentation de son indice de réfraction permet d'augmenter la durabilité chimique et/ou physique de la couche.

C'est donc vraisemblablement un phénomène tout autre qui se produit dans le procédé de traitement selon l'invention, puisque s'opère probablement une restructuration du réseau d'oxyde(s) sous l'effet des ions du faisceau à la surface de la couche, restructuration apte à se propager dans une épaisseur non négligeable de la couche. Elle conduirait alors à modifier la concentration en lacunes d'oxygène dans le réseau, modification influant alors directement sur la conductivité électrique puisque ce sont ces lacunes qui confèrent pour l'essentiel les propriétés électriques à l'oxyde. Ainsi, des ions oxydants, diminuant cette concentration diminueraient de même la conductivité, des ions réducteurs ayant l'effet inverse.

Ce phénomène mis en évidence par les auteurs de l'invention est d'autant plus étonnant que l'on prend garde à choisir un faisceau d'ions à faible énergie afin d'éviter que les zones de la couche traitées par le faisceau ne se pulvérisent à la manière d'une cible, provoquant des diminutions locales d'épaisseur que l'on cherche justement à supprimer.

En effet, on aurait alors pu craindre que les modifications engendrées dans la couche sous l'impact des ions à sa surface ne s'opèrent, si tant est que l'on pouvait les prévoir, que sur une infime épaisseur. Or, il s'est révélé que les ions du faisceau, lorsque la couche est portée à une haute température, provoquent des modifications dans le réseau d'oxyde assez importantes pour induire des variations de conductivité considérables, comme déjà mentionné, et ceci sans provoquer de pulvérisation.

Il est par ailleurs à noter que le procédé selon l'invention est d'une grande souplesse d'utilisation et peut aisément s'adapter à différentes installations et différents types de canons à ions générant le faisceau. En effet, on peut obtenir la variation de conductivité souhaitée en modulant conjointement ou séparément différents paramètres tels que la température à laquelle on porte la couche à traiter, la durée du traitement par faisceau d'ions ainsi que l'énergie des ions dudit faisceau lors de leur impact sur la couche.

Il est cependant préférable que la température de la couche soit d'au moins environ 150°C, comme par exemple 250°C.

Dans la mesure où certaines techniques de dépôt impliquent que le substrat sur lequel on dépose la couche soit chauffé à des températures excédant 150°C, il suffit alors avantageusement de procéder au traitement par faisceau d'ions juste après le dépôt de la couche, qui se trouve ainsi déjà à la température appropriée. La durée du traitement est à sélectionner de manière à rester compatible avec les exigences industrielles d'une fabrication en série.

Quant à l'énergie des ions, plusieurs solutions sont envisageables pour la maîtriser afin d'obtenir l'effet voulu sans pulvérisation.

Ce qui est en effet important de sélectionner et maîtriser n'est non pas tant l'énergie du faisceau au niveau de la source d'émission, soit le canon à ions, mais l'énergie qu'il faut choisir de "faible valeur", notamment inférieure à 100 électrons-volt et de préférence comprise entre 50 et 90 électrons-volt, avec laquelle les ions frappent la couche. Deux solutions de réglage sont envisageables. On peut tout d'abord régler cette énergie au niveau de la couche en modulant l'énergie du faisceau au niveau de la source d'émission et la distance entre source d'émission et couche, la couche n'étant pas mise sous tension. On peut également polariser cette couche lors du traitement, ce qui permet alors d'utiliser des faisceaux d'ions à la source nettement plus énergétiques que dans le cas précédent. En effet, la polarisation de la couche a pour conséquence de "freiner" les ions à l'approche de la couche, et peut être ajustée de manière à ce qu'ils frappent la couche avec la même énergie que lorsque la couche n'est pas polarisée.

Par ailleurs, est également à choisir de manière appropriée la densité ionique du faisceau, notamment par exemple de l'ordre du milliampère par centimètre carré.

Le procédé selon l'invention s'applique à tout type d'oxyde(s) métallique(s) sous-stoechiométrique(s), et/ou ceux qui sont dopés, c'est-à-dire avec insertion dans le réseau de l'oxyde du métal donné d'un certain pourcentage d'un autre métal. On peut citer notamment l'oxyde d'indium dopé à l'étain I.T.O., l'oxyde d'étain dopé au fluor SnO₂:F, l'oxyde de zinc dopé à l'indium ZnO:In, à l'aluminium ZnO:Al, à l'étain ZnO:Sn ou au fluor ZnO:F.

Quant à leur mode d'obtention, les techniques de dépôt sous vide, notamment utilisant la pulvérisation cathodique, sont bien connues et permettent de bien maîtriser les performances optiques et électriques des couches obtenues. On connaît en particulier les techniques qui s'effectuent en présence d'un champ magnétique qui augmente la mobilité des électrons, donc la probabilité d'ionisation et en conséquence la vitesse de pulvérisation de la cible. On peut citer par exemple le brevet DE-24 63 431 C2, qui présente un tel procédé utilisant un magnétron planar, et le brevet US-4 116 806, qui utilise une cible en forme de courroie, dite "belt track".

De même, on connaît les techniques de pulvérisation cathodique réactive qui permettent d'obtenir une couche mince en faisant réagir le matériau de la cible avec un gaz du plasma, le brevet US-3 907 660 présente ainsi une telle méthode pour le dépôt d'oxyde métallique sur du verre.

On peut aussi utiliser les techniques dites de pyrolyse, consistant à projeter en phase liquide, solide ou gazeuse, des précurseurs organo-métalliques sur un substrat porté à haute température de manière à ce qu'ils se décomposent en les oxydes voulus.

Ainsi pour obtenir une couche conductrice d'ITO par pyrolyse, on choisit de préférence un mélange pulvérulent de formiate d'indium et d'oxyde de dibutylétain, notamment comme décrit dans le brevet EP-B-397 292.

Si la couche conductrice est en SnO₂:F, elle peut être obtenue par pyrolyse de poudre à partir d'oxyde de dibutylétain (DBTO) en poudre et d'acide fluorhydrique anhydre gazeux, comme il est décrit dans le brevet FR-2 380 997, à partir de difluorure de dibutylétain (DBTF) éventuellement, en mélange avec du DBTO comme décrit dans les documents EP-A-178 956 et EP-A-039 256.

On peut aussi l'obtenir par pyrolyse en phase gazeuse, notamment à partir d'un mélange de composés d'étain comme (CH₃)₂ SnCl₂, (C₄H₉)₂ SnCl₂, Sn (C₂H₃)₄ et de composés organofluorés tels que CCl₂F₂, CHClF₂ et CH₃CHF₂ comme décrit dans le brevet EP-A-027 403 ou bien encore à partir de monobutyltrichloroétain et un composé de formule CX₂F₂, X pouvant être un halogène et/ou un hydrogène, tel que le chlorodifluorométhane mentionné dans le brevet EP-A-121 459.

On peut aussi l'obtenir par pyrolyse en phase liquide à partir d'acétylacétonate d'étain ou de diméthylétain-2-propionate dans des solvants organiques appropriés comme décrits notamment dans le brevet FR-2 211 411.

Des couches de ZnO:In ou de ZnO:Al peuvent être obtenues par pyrolyse en phase vapeur, à partir de diéthylzinc ou d'acétate de zinc et de triéthylindium, chlorure d'indium ou triéthylaluminium, chlorure d'aluminium, comme décrit dans la demande de brevet EP-A-385 769.

D'autres détails et caractéristiques avantageuses de l'invention ressortent de la description suivante d'exemples de réalisation non limitatifs.

Tous concernent le traitement d'une couche mince conductrice à base d'ITO sur un substrat en verre clair silico-sodo-calcique de 3 millimètres d'épaisseur, déposée par une technique de pulvérisation cathodique assistée par champ magnétique, selon les paramètres suivants : la cible est constituée d'un mélange d'oxyde d'indium et d'oxyde d'étain, dont environ 9 % molaire d'oxyde d'étain. La cathode verticale a une longueur de 380 mm et une largeur de 120 mm, le substrat en verre a les dimensions 30 x 30 cm², il est vertical et mobile. Le verre se déplace devant la cathode à une vitesse de 2 cm/mn, la puissance appliquée est de 0,55 watt/cm². Le gaz vecteur est de l'argon, la pression de l'enceinte est de 8.10⁻³ torrs (soit environ 1,1 Pa). Le verre passe devant la cathode le nombre de fois suffisant pour qu'une couche d'épaisseur d'environ 135 nanomètres soit déposée.

Le tableau ci-dessous résume les caractéristiques de la couche obtenue, sachant que R_{□} est la résistance carrée en Ohm par carré de la couche mesurée par la méthode des 4 pointes, que ρ est sa résistivité exprimée en Ohm.cm, que n est son indice de réfraction. Sont spécifiées également les caractéristiques optiques en réflexion côté couche du substrat ainsi recouvert : R_{L} est la réflexion lumineuse en pourcentage, λ dom est la longueur d'onde dominante en nanomètres et Pₑ la pureté d'excitation en pourcentage. La conjugaison de λ dom et Pₑ permet de déterminer dans le spectrum locus la couleur résiduelle et son intensité en réflexion.

**TABLEAU I**

| | COUCHE ITO |
|---|---|
| n | 2 |
| R_{□} | 19,4 |
| ρ | 2,6.10⁻⁴ |
| R_{L} | 9,9 |
| λ dom | - 562 |
| Pₑ | 23 |

En partant d'une couche d'ITO que l'on peut considérer comme présentant une conductivité électrique élevée, on souhaite créer des zones localisées où la conductivité est plus faible.

### EXEMPLE 1

On traite la couche d'ITO, dont les caractéristiques ont été précisées plus haut, en la maintenant à une température de 250°C sous vide sous une pression partielle d'oxygène moléculaire non ionisé O₂ de 2.10⁻⁴ torrs, soit 2,7.10⁻² Pascals, pendant 30 minutes. La couche ainsi traitée présente exactement les mêmes caractéristiques électriques et optiques que la couche de départ.

Les exemples 2 et 3 utilisent un faisceau d'ions oxygène généré par un canon à ions commercialisé sous le nom de Commenwealth Mark II par la Société Commenwealth Scientific. Ce canon à ions émet un faisceau dont la densité ionique, mesurée à 15 cm de la source d'émission est d'environ 3,3 mA/cm².

L'installation est la suivante : on place le substrat recouvert par la couche d'ITO dans une enceinte sous un vide de 2.10⁻⁶ torrs, soit 2,7.10⁻⁴ Pascals, qui est avantageusement l'enceinte dans laquelle s'est effectué le dépôt de la couche. Le substrat est placé verticalement sur un carrousel à environ 10 cm de distance du point de départ du faisceau.

### EXEMPLE 2

Les conditions du traitement par faisceau d'ions sont les suivantes :

| | |
|---|---|
| * énergie du faisceau | 60 e.V |
| * densité de courant ionique | 3,3 mA/cm² |
| * durée du traitement | 3 minutes |
| * température du substrat | environ 30°C |

A 30°C et sous la forte densité du courant, la zone traitée de la couche ne subit aucune variation de résistivité, puis commence à se pulvériser sous l'impact des ions à une vitesse moyenne de 10 nm/minute. Ces résultats ne conviennent donc pas, puisqu 'ils n'engendrent pas l'effet souhaité de modification de résistivité, et que la couche se trouve progressivement détruite lorsqu'on poursuit le traitement.

Les exemples 3 et 4 sont les exemples selon l'invention.

### EXEMPLE 3

Les conditions du traitement par faisceau sont les suivantes :

| | |
|---|---|
| * énergie du faisceau | 52 e.V |
| * densité du courant ionique | 0,4 mA/cm² |
| * durée du traitement | 30 minutes |
| * température du substrat | 250°C |

Aucune variation d'épaisseur n'est constatée, ce qui implique qu'il n'y a pas eu pulvérisation de la couche.

Les paramètres, déjà explicités pour le tableau I précédent (qui concernait la couche d'ITO non traitée) sont rassemblées dans le tableau II ci-dessous et concernant cette fois la zone traitée qui se trouvait au centre du champ de focalisation du faisceau.

**TABLEAU II**

| | |
|---|---|
| n | 2 |
| R_{□} | 74 |
| ρ | 10,2.10⁻⁴ |
| R_{L} | 10,5 |
| λ dom | 453 |
| Pₑ | 29 |

### EXEMPLE 4

Les conditions de traitement sont identiques à celles de l'exemple 3, sauf en ce qui concerne la durée du traitement par le faisceau d'ions qui est ici que de 6 minutes. La résistance carré de la zone qui se trouvait au centre du champ de focalisation du faisceau est augmentée jusqu'à une valeur d'environ 32 ohm.

En comparant les résultats des exemples 1 et 3 d'une part, et les exemples 2 et 3 d'autre part, on constate que pour obtenir une variation de conductivité localisée sans entraîner de variation d'épaisseur, il est nécessaire de combiner l'utilisation d'un faisceau ionique et un maintien à haute température de la couche lors du traitement.

Ainsi, dans l'exemple 1, tenter d'oxyder à haute température par des molécules d'O₂ ne donne aucun résultat tandis qu'essayer (exemple 2) de "compenser" un traitement qui se fait à température ambiante par une densité de courant ionique élevée n'aboutit qu'à détruire localement la couche.

L'invention implique donc une synergie entre chaleur et ions réactifs, qui doit vraisemblablement faciliter la restructuration de la couche dans une épaisseur suffisante pour provoquer la variation de conductivité attendue.

Il est en outre à noter qu'avantageusement dans le cas d'un dépôt d'ITO par pulvérisation à haute température, on peut effectuer consécutivement le dépôt puis le traitement de la couche, puisque celle-ci présente déjà une température élevée ; et ceci dans la chambre de dépôt même.

Si l'on compare les tableaux I et II, on voit que la résistivité des zones traitées (exemple 3) par rapport à celle de la couche initiale non traitée a été multipliée par un facteur 4, ce qui est considérable. Il en est de même pour la résistance carrée, puisque le traitement ne modifie pas l'épaisseur de la couche. Par ailleurs, de par la comparaison des exemples 3 et 4 selon l'invention, on voit que l'on peut également obtenir une variation de résistance carrée moindre mais non négligeable avec une durée de traitement de l'ordre de la minute. On peut ainsi obtenir toute une gamme de variations de résistivités entre zones traitées et non traitées, notamment en modulant le temps de traitement.

Le procédé selon l'invention est donc très performant et adaptable et peut être appliqué avec succès à des couches destinées à équiper tout particulièrement des vitrages pour avions, comprenant en général trois substrats en ce qui concerne les pare-brise.

Ainsi, dans ce cas, les couches destinées au dégivrage et traitées selon l'invention sont avantageusement disposées en face 2 sur le substrat monté côté extérieur, les couches destinées plutôt au désembuage étant placées en face 4 (substrat intermédiaire) ou 5 (substrat le plus interne).

Pour obtenir les gradients de résistance nécessaires, souvent relativement complexes vue la géométrie de ces vitrages, on peut alors aisément monter le canon à ions sur un bras mobile automatisé, se déplaçant pendant le traitement en vis-à-vis de la couche à traiter.

En conclusion, le procédé selon l'invention permet d'obtenir les variations locales des propriétés électriques voulues tout en préservant l'homogénéité des propriétés optiques. Ainsi, d'après les tableaux I et II, les aspects optiques en réflexion des zones traitées et non traitées présentent des différences à peine discernables, car les valeurs de R_{L} et pe sont très proches. De même, si les longueurs d'onde dominantes paraissent éloignées, elles sont en fait très voisines une fois représentées dans le spectrum locus, et correspondent toutes deux à une nuance très similaire.

## Revendications

1. Procédé de traitement en vue de modifier localement les propriétés de conduction électrique et/ou de réflexion dans l'infra-rouge d'une couche mince à base d'oxyde (s) métalliques (s) notamment sous-stoechiométrique (s) et disposée sur un substrat transparent notamment en verre, **caractérisé en ce qu'**il consiste à soumettre de manière sélective ladite couche que l'on a portée à une température d'au moins 150°C à un faisceau d'ions dont les paramètres sont choisis de manière à éviter la pulvérisation de ladite couche.

2. Procédé de traitement selon la revendication 1, **caractérisé en ce qu'**au moins une partie des ions du faisceau sont de nature oxydante, comme de l'oxygène ionisé, de manière à diminuer localement la conductivité électrique dans les zones de la couche soumises audit faisceau.

3. Procédé de traitement selon la revendication 1, **caractérisé en ce qu**'au moins une partie des ions du faisceau sont de nature réductrice, comme de l'hydrogène ionisé, de manière à accroître localement la conductivité électrique dans les zones de la couche soumises audit faisceau.

4. Procédé de traitement selon l'une des revendications précédentes, **caractérisé en ce qu**'on module la variation de la conductivité électrique de la couche dans les zones soumises au faisceau notamment par le choix de la température à laquelle est portée la couche, de la durée du traitement desdites zones par le faisceau, de l'énergie des ions du faisceau lors de leur impact sur la couche.

5. Procédé de traitement selon l'une des revendications précédentes, **caractérisé en ce que** l'énergie des ions du faisceau lors de leur impact sur la couche est inférieure à 100 électrons-volt.

6. Procédé de traitement selon l'une des revendications précédentes, **caractérisé en ce qu**'on polarise la couche lors du traitement par faisceau d'ions.

7. Procédé de traitement selon l'une des revendications précédentes, **caractérisé en ce que** la densité de courant ionique du faisceau d'ions est de l'ordre du milliampère par cm².

8. Procédé de traitement selon l'une des revendications précédentes, **caractérisé en ce que** l'on porte la couche lors du traitement à une température d'environ 250°C.

9. Procédé de traitement selon l'une des revendications précédentes, **caractérisé en ce qu**'il fait suite au dépôt de la couche d'oxyde (s) métallique (s) par une technique sous vide telle que la pulvérisation cathodique assistée par champ magnétique.

10. Procédé de traitement selon l'une des revendications précédentes, **caractérisé en qu**'il traite des couches d'oxyde métalliques sous-stoechiométriques et/ou dopées telles que des couches d'oxyde d'indium dopé à l'étain ITO, d'oxyde de zinc dopé à l'indium ZnO:In, au fluor ZnO:F, à l'aluminium ZnO:Al ou à l'étain ZnO:Sn, ou d'oxyde d'étain dopé au fluor SnO₂F.

11. Procédé de traitement selon l'une des revendications 1 à 10, **caractérisé en ce que** les zones des couches traitées par le faisceau d'ions oxydants présentent une résistance électrique pouvant être jusqu'à 4 fois supérieure à celle des zones non traitées.

12. Application du procédé selon l'une des revendications précédentes à la fabrication de vitrages chauffants à couche(s) présentant des zones ayant des caractéristiques électriques et/ou de réflexion dans l'infra-rouge différentes les unes des autres, notamment pour assurer un chauffage uniforme des vitrages, quelle que soit leur géométrie.

13. Application du procédé selon l'une des revendications 1 à 11 à la fabrication de vitrages chauffants pour véhicules, notamment pour avion.

## Claims

1. Treatment process for the purpose of locally modifying the properties of electrical conduction and/or reflection in the infrared of a thin film based upon metallic oxide or oxides, notably substoichiometric oxides, disposed on a transparent substrate, notably of glass, characterized in that the process consists of subjecting said film, which has been raised to a temperature of at lest 150°C, to an ion beam, the parameters of which have been so chosen as to prevent the atomization of said film.

2. Treatment process according to claim 1, characterized in that at least a portion of the ions of the beam are of an oxidizing nature, such as ionized oxygen, in such a way as locally to reduce the electrical conductivity in the zones of the film subjected to said beam.

3. Treatment process according to claim 1, characterized in that at least a portion of the ions of the beam are of a reducing nature, such as ionized hydrogen, in such a way as locally to increase the electrical conductivity in the zones of the film subjected to said beam.

4. Treatment process according to one of the preceding claims, characterized in that the variation in the electrical conductivity of the film in the zones subjected to the beam is modulated, notably, by the choice of the temperature to which the film is raised, of the treatment duration of said zones by the beam, of the energy of the ions of the beam at their impact on the film.

5. Treatment process according to one of the preceding claims, characterized in that the energy of the ions of the beam at impact on the film is less than 100 electron volts.

6. Treatment process according to one of the preceding claims, characterized in that the film is polarized during the treatment by ion beam.

7. Treatment process according to one of the preceding claims, characterized in that the ion current density of the ion beam is of the order of a milliampere per cm².

8. Treatment process according to one of the preceding claims, characterized in that the film is raised during the treatment to a temperature of approximately 250°C.

9. Treatment process according to one of the preceding claims, characterized in that it follows the deposition of the metallic oxide film or films by a vacuum technique, such as cathodic sputtering assisted by magnetic field.

10. Treatment process according to one of the preceding claims, characterized in that it treats substoichiometric and/or doped metallic oxide films such as films of indium oxide doped with tin ITO, zinc oxide doped with indium ZnO:In, with fluorine ZnO:F, with aluminium ZnO:Al or with tin ZnO:Sn, or of tin oxide doped with fluorine SnO₂:F.

11. Treatment process according to one or more of claims 1 to 10, characterized in that the zones of the films treated by the oxidizing ion beam have an electrical resistance that may be up to 4 times greater than that of the untreated zones.

12. Application of the process according to one of the preceding claims to the production of heating panes comprising a film or films possessing zones having electrical characteristics and/or characteristics of reflection in the infrared differentiated from one zone to another, notably for the purpose of assurng a uniform heating of the panes, whatever their geometry.

13. Application of the process according to one of claims 1 to 11 to the production of heating panes for vehicles, notably for aircraft.

## Patentansprüche

1. Verfahren zur Behandlung einer dünnen Schicht, die insbesondere unterstöchiometrische(s) Metalloxid(e) zur Grundlage hat und auf einem insbesondere gläsernen transparenten Substrat aufgebracht ist, um ihre elektrische Leitfähigkeit und/oder ihr Reflexionsvermögen im Infrarot lokal zu verändern, **dadurch gekennzeichnet, daß** es darin besteht, die auf eine Temperatur von mindestens 150 °C gebrachte Schicht selektiv einem Ionenstrahlenbündel auszusetzen, dessen Parameter so gewählt sind, daß die Zerstäubung dieser Schicht vermieden wird.

2. Behandlungsverfahren nach Anspruch 1, **dadurch gekennzeichnet, daß** wenigstens ein Teil der Ionen des Strahlenbündels oxidierend wirkt, wie ionisierter Sauerstoff, so daß die elektrische Leitfähigkeit in den Bereichen der Schicht, die diesem Strahlenbündel ausgesetzt gewesen sind, lokal verringert wird.

3. Behandlungsverfahren nach Anspruch 1, **dadurch gekennzeichnet, daß** wenigstens ein Teil der Ionen des Strahlenbündels reduzierend wirkt, wie ionisierter Wasserstoff, so daß die elektrische Leitfähigkeit in den Bereichen der Schicht, die diesem Strahlenbündel ausgesetzt gewesen sind, lokal erhöht wird.

4. Behandlungsverfahren nach einem der vorhergehenden Ansprüche, **dadurch gekennzeichnet, daß** die Veränderung der elektrischen Leitfähigkeit der Schicht in den Bereichen, die dem Strahlenbündel ausgesetzt werden, insbesondere durch die Wahl der Temperatur, auf welche die Schicht gebracht wird, der Dauer der Behandlung dieser Bereiche mit dem Strahlenbündel und der Energie der Ionen des Strahlenbündels bei ihrem Auftreffen auf die Schicht beeinflußt wird.

5. Behandlungsverfahren nach einem der vorhergehenden Ansprüche, **dadurch gekennzeichnet, daß** die Energie der Ionen des Strahlenbündels bei ihrem Auftreffen auf die Schicht weniger als 100 Elektronenvolt beträgt.

6. Behandlungsverfahren nach einem der vorhergehenden Ansprüche, **dadurch gekennzeichnet, daß** die Schicht während der Behandlung mit dem Ionenstrahlenbündel polarisiert wird.

7. Behandlungsverfahren nach einem der vorhergehenden Ansprüche, **dadurch gekennzeichnet, daß** die Ionenstromdichte des Ionenstrahlenbündels etwa ein Milliampere pro cm² beträgt.

8. Behandlungsverfahren nach einem der vorhergehenden Ansprüche, **dadurch gekennzeichnet, daß** die Schicht während der Behandlung auf eine Temperatur von etwa 250 °C gebracht wird.

9. Behandlungsverfahren nach einem der vorhergehenden Ansprüche, **dadurch gekennzeichnet, daß** es sich an das Aufbringen der Schicht aus Metalloxid(en) durch ein Vakuumverfahren wie die magnetfeldgestützte Kathodenzerstäubung anschließt.

10. Behandlungsverfahren nach einem der vorhergehenden Ansprüche, **dadurch gekennzeichnet, daß** mit ihm Metalloxidschichten behandelt werden, die unterstöchiometrisch und/oder dotiert sind, wie Schichten aus mit Zinn dotiertem Indiumoxid, ITQ, mit Indium, ZnO:In, mit Fluor, ZnO:F, mit Aluminium, ZnO:Al, oder mit Zinn, ZnO:Sn, dotiertem Zinkoxid oder mit Fluor dotiertem Zinnoxid, SnO₂:F.

11. Behandlungsverfahren nach einem der Ansprüche 1 bis 10, **dadurch gekennzeichnet, daß** die mit dem Strahlenbündel aus oxidierenden Ionen behandelten Bereiche der Schichten einen elektrischen Widerstand aufweisen, der bis zu 4 Mal größer als der der unbehandelten Bereiche sein kann.

12. Anwendung des Verfahrens nach einem der vorhergehenden Ansprüche auf die Herstellung beheizbarer Verglasungen mit (einer) Schicht(en), welche Bereiche aufweist (aufweisen), deren elektrische Eigenschaften und/oder Reflexionsvermögen im Infrarot voneinander verschieden sind, insbesondere um eine einheitliche Beheizung der Verglasungen unabhängig von deren Geometrie sicherzustellen.

13. Anwendung des Verfahrens nach einem der Ansprüche 1 bis 11 auf die Herstellung beheizbarer Verglasungen für Fahrzeuge, insbesondere Flugzeuge.
